# EUROPÄISCHE PATENTSCHRIFT

(11) **EP 1 854 652 B1**
(45) Veröffentlichungstag und Bekanntmachung des Hinweises auf die Patenterteilung: **27.10.2010**
(21) Anmeldenummer: 07106781.3
(22) Anmeldetag: 24.04.2007
(51) Int. Cl.: B60K 13/04, F16F 1/30

(54) **Abgasanlage**
Exhaust assembly
Installation d'échappement

(30) Priorität: 08.05.2006 DE 102006021641
(43) Veröffentlichungstag der Anmeldung: 14.11.2007
(73) Patentinhaber: J. Eberspächer GmbH & Co. KG, 73730 Esslingen (DE)
(72) Erfinder: Riekers, Ralf, Dr., 70182, Stuttgart (DE); Prommersberger, Holger, 70825, Korntal-Münchingen (DE)
(74) Vertreter: BRP Renaud & Partner

(56) Entgegenhaltungen:
- DE-A1- 10 019 643
- DE-A1- 19 937 488
- DE-B3- 10 249 498
- FR-A1- 2 674 800
- FR-A1- 2 678 221
- US-A- 4 550 795
- US-A1- 2003 106 735

## Beschreibung

Die vorliegende Erfindung betrifft eine Abgasanlage an wenigstens einem Bauteil eines Kraftfahrzeugs, mit den Merkmalen gemäß dem Oberbegriff des Anspruchs 1.

Eine Befestigungsvorrichtung dieser Art zeichnet sich dadurch aus, dass sie in einer Längsrichtung der Abgasanlage vergleichsweise große Relativbewegungen zwischen der jeweiligen abgasseitigen Komponente und dem jeweiligen fahrzeugseitigen Bauteil aufnehmen muss und hierzu über eine entsprechende Elastizität verfügt. Derartige Relativbewegungen kommen durch thermische Ausdehnungseffekte zustande, die im Betrieb des Fahrzeugs durch die Aufheizung der Abgasanlage entstehen. Zu diesem Zweck kann eine derartige Befestigungsvorrichtung einen Komponentenschenkel aufweisen, der im montierten Zustand an der jeweiligen Komponente fest angebracht ist, sowie einen Bauteilschenkel, der im montierten Zustand am jeweiligen Bauteil fest angebracht ist. Die beiden Schenkel lassen sich dann über einen Kopplungskörper aneinander befestigen, wodurch sie in einer Verbindungsrichtung voneinander beabstandet sind. Die Schenkel sind zweckmäßig blechförmig ausgestaltet, wodurch sich in der Verbindungsrichtung, die zweckmäßig parallel zur Längsrichtung der Abgasanlage verläuft, die gewünschte Elastizität der Befestigungsvorrichtung ergibt.

Es hat sich gezeigt, dass eine derartige Befestigungsvorrichtung aufgrund der im Betrieb daran angreifenden Belastungen vergleichsweise rasch ermüdet, dadurch beschädigt und am Ende zerstört wird.

Eine Abgasanlage der eingangs genannten Art, bei der wenigstens eine Komponente mittels einer Befestigungsvorrichtung an wenigstens einem Bauteil eines Kraftfahrzeugs befestigbar ist, ist aus der FR 2 678 221 A1 bekannt. Sie umfasst einen Komponentenschenkel, der an der wenigstens einen Komponente der Abgasanlage starr befestigt ist, sowie einen Bauteilschenkel, der an dem wenigstens einen Bauteil des Kraftfahrzeugs starr befestigt ist. Dabei ist ein Kopplungskörper mit oder aus einem Elastomer einerseits fest mit dem Komponentenschenkel und andererseits fest mit dem Bauteilschenkel verbunden.

Weitere Abgasanlagen, die mittels einer Befestigungsvorrichtung an einem Kraftfahrzeug befestigt werden können, sind aus der US 2003/0106735 A1 und aus der DE 100 19 643 A1 bekannt.

Die vorliegende Erfindung beschäftigt sich mit dem Problem, für eine Abgasanlage der eingangs genannten Art eine verbesserte Ausführungsform anzugeben, die sich insbesondere durch eine erhöhte Lebenszeit auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, den Kopplungskörper mit einem Elastomer auszustatten bzw. als Elastomer auszugestalten. Durch diese Bauweise kann der Kopplungskörper z.B. Drehschwingungen zwischen den Schenkeln, die um die genannte Verbindungsrichtung oszillieren, bedämpfen. Die Erfindung nutzt die Erkenntnis, dass sich im Betrieb des Fahrzeugs Schwingungen in der Abgasanlage einstellen, die im Bereich der Befestigungsvorrichtung zu Drehschwingungen führen mit dem Kopplungskörper als Pol. Im Bereich von Resonanzfrequenzen der Abgasanlage bzw. der jeweiligen mit der Befestigungsvorrichtung verbundenen Komponente können besagte Schwingungen relativ hohe Amplituden erreichen, die bei einem starren Kopplungskörper bzw. bei einer starren Befestigung der beiden Schenkel aneinander zu einer Beschädigung führen. Durch die Verwendung eines Elastomers lassen sich die Schwingungen bedämpfen, wodurch dem Schwingungssystem Energie entzogen wird. Gleichzeitig ist der Kopplungskörper durch das Elastomer elastisch und somit weniger anfällig für Beschädigungen durch zwischen den Schenkeln übertragene Momente und Dehnungen. Die Lebensdauer der Befestigungsvorrichtung wird somit erheblich verlängert.

Bei der Erfindung ist das Bauteil des Kraftfahrzeugs ein Getriebe oder ein Getriebeabschnitt oder eine Getriebeglocke. Ferner ist bei der Erfindung der als Elastomer ausgestaltete Kopplungskörper so ausgelegt, dass die Befestigungsvorrichtung als Schwingungstilger oder kurz Tilger arbeitet. Ein Tilger ist durch eine Masse, eine Feder und einen Dämpfer definiert und üblicherweise zur Bedämpfung bestimmter Schwingungsfrequenzen ausgelegt. Damit die Befestigungsvorrichtung im montierten Zustand als Tilger arbeitet, sind die Feder und der Dämpfer durch den Kopplungskörper, also durch den Elastomerkörper gebildet, während die Masse durch die wenigstens eine Komponente der Abgasanlage gebildet ist, die ihrerseits durch einen Katalysator gebildet ist. Durch die Ausgestaltung der Befestigungsvorrichtung als Tilger lassen sich die auftretenden Schwingungsamplituden signifikant reduzieren, wodurch dem System vergleichsweise viel Schwingungsenergie entnommen wird. In der Folge wird die Gefahr einer Überlastung der Befestigungsvorrichtung und der Abgasanlage beträchtlich reduziert.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine perspektivische Ansicht auf eine Befestigungsvorrichtung,
- Fig. 2 bis 4: teilweise geschnittene Ansichten eines Teilbereichs der Befestigungsvorrichtung bei verschiedenen Ausführungsformen.

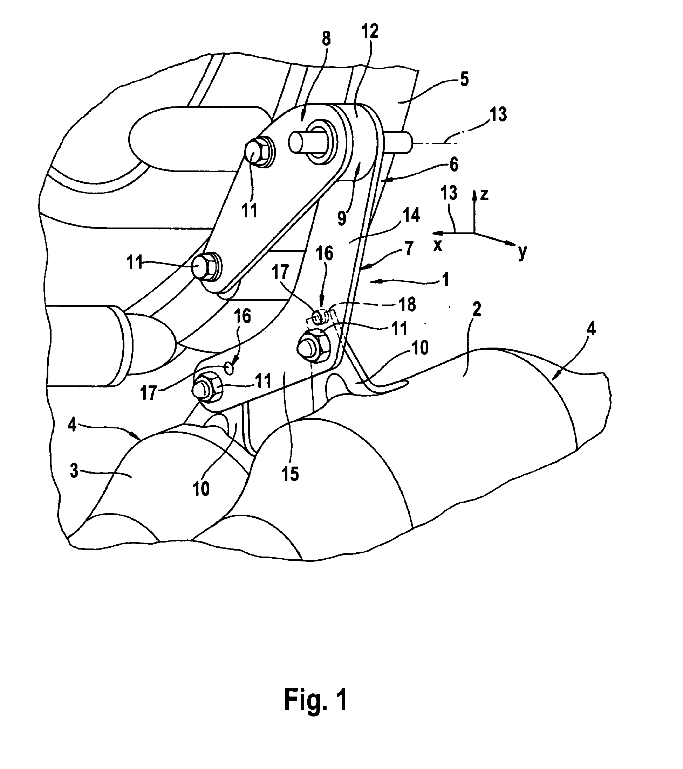

Entsprechend Fig. 1 umfasst eine Befestigungsvorrichtung 1, mit deren Hilfe zumindest eine Komponente 2, 3 einer Abgasanlage 4 an zumindest einem Bauteil 5 eines im übrigen nicht gezeigten Kraftfahrzeugs 6 befestigbar ist, einen Komponentenschenkel 7, einen Bauteilschenkel 8 und einen Kopplungskörper 9. Der Komponentenschenkel 7 ist im gezeigten, montierten Zustand starr oder steif an der jeweiligen Komponente 2, 3 befestigt. Der Bauteilschenkel 8 ist im montierten Zustand starr oder steif am jeweiligen Bauteil 5 befestigt. Über den Kopplungskörper 9 sind die beiden Schenkel 7, 8 aneinander befestigt.

Bei den Komponenten 2, 3 der Abgasanlage 4 handelt es sich beispielsweise jeweils um einen Katalysator. Die Abgasanlage 4 ist im gezeigten Beispiel zweiflutig ausgestaltet und weist dementsprechend zwei Abgasstränge auf, die von Abgas parallel durchströmbar sind und die jeweils einen Katalysator 2, 3 enthalten. Die Katalysatoren 2, 3 sind dabei in dem in Fig. 1 gezeigten Bereich des Fahrzeugs 6 nebeneinander angeordnet. Mit Hilfe der Befestigungsvorrichtung 1 können die beiden Katalysatoren 2, 3 gleichzeitig am Bauteil 5 befestigt werden. Hierzu weist jeder Katalysator 2, 3 eine Befestigungskonsole 10 auf, über welche die jeweilige Komponente 2, 3 am Komponentenschenkel 7 starr oder steif befestigt ist. Die steife oder starre Befestigung wird hierbei mittels Verschraubungen 11 realisiert.

Beim wenigstens einen Bauteil 5 des Fahrzeugs 6 handelt es sich um ein Getriebe bzw. um einen Getriebeabschnitt, insbesondere um eine sogenannte Getriebeglocke. Auch hier wird die starre oder steife Befestigung zwischen dem Bauteilschenkel 8 und dem Bauteil 5 durch Verschraubungen 11 realisiert.

Der Kopplungskörper 9 ist aus einem Elastomer hergestellt, das im folgenden mit 12 bezeichnet wird. Das Elastomer 12 oder der Elastomerkörper 12 ist einerseits fest mit dem Komponentenschenkel 7 und andererseits fest mit dem Bauteilschenkel 8 verbunden.

Die beiden Schenkel 7, 8 sind bei der hier gezeigten bevorzugten Ausführungsform jeweils blechförmig oder flach ausgestaltet und vorzugsweise so geformt, dass sie sich jeweils in einer Ebene erstrecken. Diese Ebene erstreckt sich quer zu einer Verbindungsrichtung, die in den Figuren durch einen Pfeil 13 angedeutet ist. Diese Verbindungsrichtung 13 erstreckt sich vorzugsweise parallel zu einer Längsrichtung der Abgasstränge der Abgasanlage 4, welche in einem kartesischen Koordinatensystem als x-Richtung dient. Folglich sind die Ebenen, in denen sich die blechförmigen Schenkel 7, 8 erstrecken, y-z-Ebenen des genannten Koordinatensystems. Die Schenkel 7, 8 sind blechförmig oder flach, weil sie in ihrer Dickenrichtung kleiner dimensioniert sind als quer dazu. In der Verbindungsrichtung 13 verbindet der Kopplungskörper 9 die beiden Schenkel 7, 8 miteinander. Gleichzeitig bewirkt der Kopplungskörper 9 in besagter Verbindungsrichtung 13 eine Beabstandung zwischen den beiden Schenkeln 7, 8. Durch die Blechbauweise der Schenkel 7, 8 und durch deren y-z-Orientierung kann die Befestigungsvorrichtung 1 bereits über die Schenkel 7, 8 Relativbewegungen in der x-Richtung zwischen der Abgasanlage 4 und dem Fahrzeug 6 aufnehmen. Derartige Relativbewegungen resultieren aus thermisch bedingten Längenänderungen der Abgasanlage 4, die sich im Betrieb stark aufheizt. Um die gewünschte Flexibilität der Befestigungsvorrichtung 1 in der x-Richtung zu erzielen, besitzt im vorliegenden Fall der Komponentenschenkel 7 einen Verbindungsabschnitt 14, der den Kopplungskörper 9 mit einem Anbindungsabschnitt 15 des Komponentenschenkels 7 verbindet und dadurch den Abstand zwischen den Komponenten 2, 3 und dem Bauteil 5 überbrückt. Durch das Elastomer 12 wird die Elastizität der Befestigungsvorrichtung 1 für die in der x-Richtung orientierten Relativverstellungen zwischen den Komponenten 2, 3 und dem Bauteil 5 verbessert.

Im Betrieb des Fahrzeugs 6 kann es zu Schwingungen innerhalb der Abgasanlage 4 kommen, die sich im Bereich der Befestigungsvorrichtung 1 z.B. in Form von Drehschwingungen zeigen, bei denen sich die Schenkel 7, 8 relativ zueinander und mit dem Kopplungskörper 9 als Schwingungspol z.B. um die Verbindungsrichtung 13 oszillierend bewegen. Auch derartige Drehschwingungen lässt der Kopplungskörper 9 aufgrund des Elastomers 12 zu. Allerdings wirkt das Elastomer 12 derartigen Drehschwingungen dämpfend entgegen. Das bedeutet, dass im Elastomer 12 aufgrund der mit den Drehschwingungen einhergehenden Verformungen Schwingungsenergie in Wärmeenergie dissipiert wird, wodurch dem Schwingungssystem Energie entzogen wird. Die auftretenden Schwingungsamplituden werden dadurch reduziert. Gleichzeitig wird die Gefahr einer Beschädigung der Befestigungsvorrichtung 1 aufgrund der Elastizität des Elastomers 12 reduziert. Zu nennen sind in diesem Zusammenhang auch erhebliche Belastungen durch Laststöße aufgrund von Fahrbahnanregung sowie thermische Dehnungen, die vom Elastomer 12 gedämpft aufgenommen werden.

Von besonderem Interesse ist eine Ausführungsform, bei welcher der Kopplungskörper 9 bzw. das Elastomer 12 so ausgelegt ist, dass die Befestigungsvorrichtung 1 im montierten Zustand zusammen mit der daran befestigten wenigstens einen Komponente 2, 3 wie ein Schwingungstilger, kurz Tilger genannt, arbeitet. Der Kopplungskörper 9 bzw. das Elastomer 12 bildet dabei die Feder und den Dämpfer des Tilgers, während die über die Befestigungsvorrichtung 1 an das Bauteil 5 angebundenen Komponenten 2, 3 die Masse des Tilgers bilden. Demnach ist die Befestigungsvorrichtung 1 bzw. deren Elastomer 12 auf das durch die Abgasanlage 4 gebildete Schwingungssystem ausgelegt, und zwar gezielt so, dass die über die Befestigungsvorrichtung 1 am Bauteil 5 befestigten Komponenten 2, 3 zusammen mit der Befestigungsvorrichtung 1 besagten Tilger bilden. In der Folge können Schwingungszustände, die im Bereich der Komponenten 2, 3 Schwingungsbäuche zeigen, intensiv bedämpft werden, wodurch deren Amplituden drastisch reduziert werden. In der Folge ist die Belastung der Befestigungsvorrichtung 1 deutlich reduziert, wodurch sich deren Dauerhaltbarkeit entsprechend verlängert. Bei der als Tilger arbeitenden Befestigungsvorrichtung 1 dient das Elastomer 12 bzw. der Kopplungskörper 9 nicht nur als Dämpfer, vielmehr arbeitet er innerhalb des Tilgers zusätzlich als Feder und ermöglicht durch seine gezielte Dimensionierung die gewünschte Tilgungswirkung.

Besagter Tilger ist dabei zum Bedämpfen von Drehschwingungen ausgelegt, die um den Pol, also um den Kopplungskörper 9 oszillieren. Des Weiteren ist besagter Tilger bevorzugt zum Bedämpfen solcher Schwingungsfrequenzen ausgelegt, mit denen die wenigstens eine Komponente 2, 3 im Resonanzfall schwingt. Schwingungen im Resonanzbereich können zu besonders großen Amplituden führen, die demzufolge eine besonders hohe Zerstörungskraft aufweisen. Durch die gezielte Auslegung des Kopplungskörpers 9 bzw. des Elastomers 12 zur Schaffung eines Tilgers, der gerade bei derartigen Resonanzfällen seine bevorzugte Tilgungswirkung zeigt, kann die Gefahr von Beschädigungen erheblich reduziert werden.

Entsprechend Fig. 1 ist der Bauteilschenkel 8 über zumindest zwei voneinander beabstandete Befestigungsstellen, nämlich über die Verschraubungen 11 am Bauteil 5 befestigt. Hierdurch ist der Bauteilschenkel 8 über die genannten Befestigungsstellen 11 gegen Momente um die Verbindungsrichtung 13 koaxial zum Kopplungskörper 9 abgestützt. Auch der Komponentenschenkel 7 ist an der jeweiligen Komponente 2 gegen Drehmomente um die Verbindungsrichtung 13 abgestützt. Hierzu ist zu jeder Befestigungsstelle, also zu jeder Verschraubung 11 jeweils eine Momentabstützstelle 16 vorgesehen. Eine derartige Momentabstützstelle 16 umfasst exemplarisch ein erstes Element, z. B. einen vom Komponentenschenkel 7 abstehenden Zapfen 17, der sich in der Momentenrichtung, also bezüglich einer Drehung um die Verbindungsrichtung 13 koaxial zum Kopplungskörper 9 an einer zweiten Komponente abstützt, die hier beispielsweise durch eine Gabel 18 gebildet ist, die an der jeweiligen Konsole 10 ausgebildet ist und in welche der Zapfen 17 eingreift.

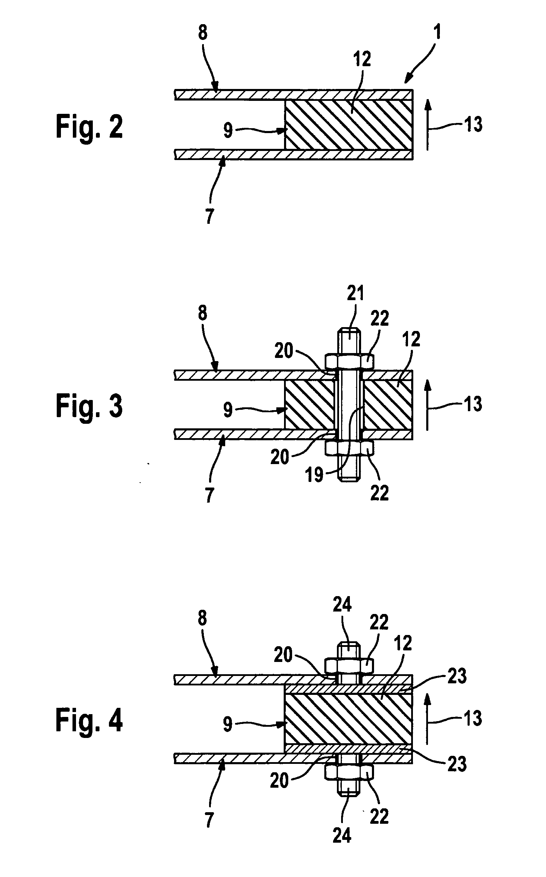

Entsprechend Fig. 2 kann bei einer einfachen Ausführungsform der Kopplungskörper 9 ausschließlich aus dem Elastomer 12 bestehen. Bei dieser Ausführungsform ist das Elastomer 12 an beide Schenkel 7, 8 anvulkanisiert. Alternativ kann das Elastomer 12 auch an wenigstens einen der Schenkel 7, 8 angegossen oder angespritzt sein.

Bei der in Fig. 3 gezeigten Ausführungsform weist der Kopplungskörper 9 in seinem Elastomer 12 eine Durchgangsöffnung 19 auf. Durch die Durchgangsöffnung 19 sowie durch entsprechende Öffnungen 20, die in den Schenkeln 7, 8 fluchtend zur Durchgangsöffnung 19 ausgebildet sind, ist ein Sicherungselement 21 hindurchgesteckt. Das Sicherungselement 21 besteht beispielsweise aus einer Gewindestange. Das Sicherungselement 21 dient zum verliersicheren Verbinden der beiden Schenkel 7, 8 miteinander. Hierzu ist das Sicherungselement 21 beispielsweise mit zwei Muttern 22 gegen die Schenkel 7, 8 verschraubt. Die Muttern 22 können drehgesichert sein. Insbesondere ist eine axiale Verspannung nicht erforderlich. Das Sicherungselement 21 ist an den Schenkeln 7, 8 so festgelegt, dass es an einer Momentübertragung zwischen den Schenkeln 7, 8 um den als Pol wirkenden Kopplungskörper 9 nicht oder nur unwesentlich beteiligt ist. Die unwesentliche oder geringe Beteiligung an der Momentübertragung ist im Vergleich zum Kopplungskörper 9 zu sehen, der die Momentübertragung zwischen den Schenkeln 7, 8 ausschließlich oder nahezu ausschließlich realisiert. Das Sicherungselement 21 ist für den Fall vorgesehen, dass das Elastomer 12 beschädigt wird und die erforderliche Haltekraft zwischen den Schenkeln 7, 8 nicht mehr bereitstellen kann. Auch bei der Ausführungsform gemäß Fig. 3 ist das Elastomer 12 zumindest an einen der Schenkel 7, 8 angegossen oder angespritzt oder anvulkanisiert.

Bei der in Fig. 4 gezeigten Ausführungsform weist der Kopplungskörper 9 an jeder Stirnseite eine Scheibe 23 sowie einen von der Scheibe 23 abstehenden Bolzen 24 auf. Besagter Bolzen 24 ist bevorzugt ein Gewindebolzen und ist drehfest mit der Scheibe 24 verbunden. Der jeweilige Bolzen 24 durchdringt den jeweiligen Schenkel 7, 8 jeweils wieder in einer Öffnung 20 und ist mit dem jeweiligen Schenkel 8 mittels einer Mutter 22 fest verschraubt. Im Unterschied zu den in Fig. 3 gezeigten Verschraubungen sind die in Fig. 4 gezeigten Verschraubungen jedenfalls so fest ausgeführt, dass darüber eine hinreichende Momentübertragung zwischen den Schenkeln 7, 8 realisiert werden kann.

In den gezeigten Ausführungsformen besitzt das Elastomer 12 eine zylindrische Außenkontur. Des Weiteren ist das Elastomer 12 bei der in Fig. 3 gezeigten Ausführungsform als Ringkörper ausgestaltet, während es bei den anderen Ausführungsformen als Vollkörper ausgestaltet ist. Die Dicke des Elastomers 12 in x-Richtung bzw. in der Verbindungsrichtung 13 beträgt vorzugsweise zwischen 2 mm und 20 mm. Das Elastomer 12 ist bevorzugt auf einer Silikonbasis hergestellt. Andere Kunststoffe, z.B. auf Kautschukbasis oder ein VMO-Kunststoff, sind ebenso möglich. Beispielsweise sind für das Elastomer 12 folgende gummiartigen Materialien denkbar: bis 200°C beständiges Silikon, bis 120°C oder bis 150°C beständiges EPDM oder Naturkautschuk. Des Weiteren ist das Elastomer 12 vorzugsweise so ausgelegt, dass es eine Shore-Härte von 20 ShA bis 150 ShA, vorzugsweise 60 ShA bis 120 ShA, aufweist.

## Patentansprüche

1. Abgasanlage (4), bei der wenigstens eine Komponente (2, 3) mittels einer Befestigungsvorrichtung (1) an wenigstens einem Bauteil (5) eines Kraftfahrzeugs (6) befestigtbar ist,
- wobei ein Komponentenschenkel (7) an der wenigstens einen Komponente (2, 3) der Abgasanlage (4) starr befestigt ist,
- wobei ein Bauteilschenkel (8) an dem wenigstens einen Bauteil (5) des Kraftfahrzeugs (6) starr befestigt ist,
- wobei ein Kopplungskörper (9) mit oder aus einem Elastomer (12) einerseits fest mit dem Komponentenschenkel (7) und andererseits fest mit dem Bauteilschenkel (8) verbunden ist,
**dadurch gekennzeichnet,**
- **dass** das Bauteil (5) des Kraftfahrzeugs (6) ein Getriebe oder ein Getriebeabschnitt oder eine Getriebeglocke ist,
- dass die Befestigungsvorrichtung (1) zusammen mit der wenigstens einen durch einen Katalysator gebildeten Komponente (2,3) als Tilger arbeitet, dessen Feder und Dämpfer durch den Kopplungskörper (9) gebildet sind und dessen Masse durch die wenigstens eine Komponente (2, 3) der Abgasanlage (4) gebildet ist.

2. Abgasanlage nach Anspruch 1,
**dadurch gekennzeichnet,**
**dass** der Tilger zum Bedämpfen von Drehschwingungen ausgelegt ist, die um den Kopplungskörper (9) als Schwingungspol und/oder um eine Verbindungsrichtung (13) oszillieren, in welcher der Kopplungskörper (9) die beiden Schenkel (7, 8) voneinander beabstandet.

3. Abgasanlage nach Anspruch 1 oder 2,
**dadurch gekennzeichnet,**
**dass** der Tilger zum Bedämpfen von Schwingungsfrequenzen ausgelegt ist, mit denen die wenigstens eine Komponente (2, 3) der Abgasanlage (4) im Resonanzfall schwingt.

4. Abgasanlage nach einem der Ansprüche 1 bis 3,
**dadurch gekennzeichnet,**
**dass** zumindest einer der Schenkel (7, 8) blechförmig ausgestaltet ist und sich in einer Ebene erstreckt, die quer zu einer Verbindungsrichtung (13) verläuft, in welcher der Kopplungskörper (9) die beiden Schenkel (7, 8) miteinander verbindet.

5. Abgasanlage nach einem der Ansprüche 1 bis 4,
**dadurch gekennzeichnet,**
**dass** der Kopplungskörper (9) zumindest an einen der Schenkel (7, 8) angegossen oder angespritzt oder anvulkanisiert ist.

6. Abgasanlage nach einem der Ansprüche 1 bis 5,
**dadurch gekennzeichnet,**
**dass** der Kopplungskörper (9) zumindest mit einem der Schenkel (7, 8) über eine Scheibe (23) und einen davon abstehenden Bolzen (24) verschraubt ist, an welche der Kopplungskörper (9) angegossen oder angespritzt oder anvulkanisiert ist.

7. Abgasanlage nach einem der Ansprüche 1 bis 6,
**dadurch gekennzeichnet,**
**dass** der Kopplungskörper (9) eine zentrale Durchgangsöffnung (19) aufweist, durch die ein Sicherungselement (21) hindurchgesteckt ist, das die beiden Schenkel (7, 8) verliersicher miteinander verbindet, wobei das Sicherungselement (21) an einer Momentübertragung zwischen den Schenkeln (7, 8) um eine Verbindungsrichtung (13), in welcher der Kopplungskörper (9)
die beiden Schenkel (7, 8) voneinander beabstandet, nicht oder im Vergleich zum Kopplungskörper (9) nur gering beteiligt ist.

8. Abgasanlage nach einem der Ansprüche 1 bis 7,
**dadurch gekennzeichnet,**
**dass** zumindest einer der Schenkel (7, 8) über wenigstens zwei Befestigungsstellen (11) an der wenigstens einen Komponente (2, 3) oder an dem wenigstens einen Bauteil (5) befestigt ist.

9. Abgasanlage nach einem der Ansprüche 1 bis 8,
**dadurch gekennzeichnet,**
**dass** zumindest einer der Schenkel (7, 8) am jeweiligen Bauteil (5) oder an der jeweiligen Komponente (2, 3) über eine Befestigungsstelle (11) und eine Momentabstützstelle (16) befestigt ist.

10. Abgasanlage nach einem der Ansprüche 1 bis 9,
**dadurch gekennzeichnet,**
**dass** die Komponenten (2, 3) der Abgasanlage (4) zwei Katalysatoren von zwei parallel von Abgas durchströmten Abgassträngen der Abgasanlage (4) sind.

11. Abgasanlage nach einem der Ansprüche 1 bis 10, **dadurch gekennzeichnet,**
- **dass** das Elastomer (12) eine Shore-Härte von 20 ShA bis 150 ShA aufweist, und/oder
- **dass** das Elastomer (12) auf einer Silikonbasis oder auf einer Kautschukbasis hergestellt ist.

## Claims

1. An exhaust system (4), wherein at least one component (2, 3) is fastened to at least one part (5) of a motor vehicle (6) by means of a fastening device (1),
- wherein a component leg (7) is rigidly fastened to the at least one component (2, 3) of the exhaust system (4),
- wherein a part leg (8) is rigidly fastened to the at least one part (5) of the motor vehicle (6),
- wherein a coupling body (9) with or of an elastomer (12) on the one hand is fixedly connected with the component leg (7) and on the other hand fixedly connected with the part leg (8),
**characterized in that**
- the part (5) of the motor vehicle (6) is a transmission/or a transmission section or a transmission bell,
- the fastening device (1) together with the at least one component (2, 3) formed by a catalytic converter operates as absorber whose spring and damper are formed by the coupling body (9) and whose mass is formed by the at least one component (2, 3) of the exhaust system (4).

2. The exhaust system according to Claim 1,
**characterized in that**
the absorber is designed for damping rotary oscillations which oscillate about the coupling body (9) as vibration pole and/or about a connecting device (13), in which the coupling body (9) spaces the two legs (7, 8) from each other.

3. The exhaust system according to Claim 1 or 2,
**characterized in that**
the absorber is designed for the damping of vibration frequencies with which the at least one component (2, 3) of the exhaust system (4) vibrates in the resonance case.

4. The exhaust system according to any one of the Claims 1 to 3,
**characterized in that**
at least one of the legs (7, 8) is designed sheet metal shaped and extends in a plane that runs transversely to a connecting direction (13) in which the coupling body (9) connects the two legs (7, 8) with each other.

5. The exhaust system according to any one of the Claims 1 to 4,
**characterized in that**
the coupling body (9) is at least cast or moulded or vulcanized on to one of the legs (7, 8).

6. The exhaust system according to any one of the Claims 1 to 5,
**characterized in that**
the coupling body (9) is at least screwed to one of the legs (7, 8) via a washer (23) and a bolt (24) standing away from said washer, on to which the coupling body (9) is cast or moulded or vulcanized.

7. The exhaust system according to any one of the Claims 1 to 6,
**characterized in that**
the coupling body (9) comprises a central through-opening (19) through which a locking element (21) which captively connects the two legs (7, 8) with each other is inserted, wherein the locking element (21) is not involved in moment transmission between the legs (7, 8) about a connecting direction (13) in which the coupling body (9) spaces the two legs (7, 8) from each other or compared with the coupling body (9) only moderately so.

8. The exhaust system according to any one of the Claims 1 to 7,
**characterized in that**
at least one of the legs (7, 8) is fastened to the at least one component (2, 3) or to the at least one part (5) via at least two fastening points (11).

9. The exhaust system according to any one of the Claims 1 to 8,
**characterized in that**
at least one of the legs (7, 8) is fastened to the respective part (5) or to the respective component (2, 3) via a fastening point (11) and a moment support point (16).

10. The exhaust system according to any one of the Claims 1 to 9,
**characterized in that**
the components (2, 3) of the exhaust system (4) are two catalytic converters of two exhaust lines of the exhaust system (4) subjected to parallel through-flow of exhaust gas.

11. The exhaust system according to any one of the Claims 1 to 10, **characterized in that**
- the elastomer (12) has a shore hardness of 20 ShA to 150 ShA, and/or
- the elastomer (12) is produced on a silicon base or on a rubber base.

## Revendications

1. Installation d'échappement (4), sur laquelle au moins un composant (2, 3) est fixé au moyen d'un dispositif de fixation (1) sur au moins un élément de construction (5) d'un véhicule automobile (6),
- une branche de composant (7) étant fixée de façon rigide sur le au moins un composant (2, 3) de l'installation d'échappement (4),
- une branche d'élément de construction (8) étant fixée de façon rigide sur le au moins un élément de construction (5) du véhicule automobile (6),
- un corps d'accouplement (9) avec ou à base d'un élastomère (12) étant relié d'une part fixement à la branche de composant (7) et d'autre part fixement à la branche d'élément de construction (8),
**caractérisée en ce que**
- l'élément de construction (5) du véhicule automobile (6) est un engrenage ou une partie d'engrenage ou une cloche d'engrenage,
- le dispositif de fixation (1) travaille conjointement avec le au moins un composant (2, 3) relié par un catalyseur en tant qu'amortisseur, dont le ressort et l'amortisseur sont formés par le corps de couplage (9) et dont la masse est formée par le au moins un composant (2, 3) de l'installation d'échappement (4).

2. Installation d'échappement selon la revendication 1,
**caractérisée en ce que**
l'amortisseur est conçu pour l'amortissement de vibrations de rotation, qui oscillent autour du corps de couplage (9) comme pôle de vibrations et/ou autour d'une direction de liaison (13), dans laquelle le corps de couplage (9) espace les deux branches (7, 8) l'une de l'autre.

3. Installation d'échappement selon la revendication 1 ou 2,
**caractérisée en ce que**
l'amortisseur est conçu pour l'amortissement de fréquences de vibration, avec lesquelles le au moins un composant (2, 3) de l'installation d'échappement (4) oscille en cas de résonance.

4. Installation d'échappement selon l'une quelconque des revendications 1 à 3,
**caractérisée en ce que**
au moins l'une des branches (7, 8) est conçue en forme de tôle et s'étend dans un plan qui est agencé transversalement à une direction de liaison (13), dans laquelle le corps de couplage (9) relie les deux branches (7, 8) l'une à l'autre.

5. Installation d'échappement selon l'une quelconque des revendications 1 à 4,
**caractérisée en ce que**
le corps de couplage (9) est rapporté par coulée ou pulvérisation ou vulcanisation au moins sur l'une des branches (7, 8).

6. Installation d'échappement selon l'une quelconque des revendications 1 à 5,
**caractérisée en ce que**
le corps de couplage (9) est vissé au moins avec l'une des branches (7, 8) au moyen d'un disque (23) et d'un boulon (24) espacé de celui-ci, sur lesquels le corps de couplage (9) est rapporté par coulée ou pulvérisation ou vulcanisation.

7. Installation d'échappement selon l'une quelconque des revendications 1 à 6,
**caractérisée en ce que**
le corps de couplage (9) présente une ouverture de passage (19) centrale, à travers laquelle un élément de blocage (21) est enfiché, lequel relie les deux branches (7, 8) de façon imperdable l'une à l'autre, l'élément de blocage (21) n'étant pas impliqué ou seulement faiblement impliqué par rapport au corps de couplage (9) dans une transmission de couple entre les branches (7, 8) autour d'une direction de liaison (13), dans laquelle le corps de couplage (9) espace les deux branches (7, 8) l'une de l'autre.

8. Installation d'échappement selon l'une quelconque des revendications 1 à 7,
**caractérisée en ce que**
au moins l'une des branches (7, 8) est fixée au moyen d'au moins deux points de fixation (11) sur le au moins un composant (2, 3) ou sur le au moins un élément de construction (5).

9. Installation d'échappement selon l'une quelconque des revendications 1 à 8,
**caractérisée en ce que**
au moins l'une des branches (7, 8) est fixée sur l'élément de construction (5) respectif ou sur le composant (2, 3) respectif au moyen d'un point de fixation (11) et d'un point de soutien de couple (16).

10. Installation d'échappement selon l'une quelconque des revendications 1 à 9,
**caractérisée en ce que**
les composants (2, 3) de l'installation d'échappement (4) sont deux catalyseurs des deux branches d'échappement, traversés parallèlement par des gaz d'échappement, de l'installation d'échappement (4).

11. Installation d'échappement selon l'une quelconque des revendications 1 à 10,
**caractérisée en ce que**
- l'élastomère (12) présente une dureté Shore de 20 ShA jusqu'à 150 ShA, et/ou
- l'élastomère (12) est fabriqué sur une base de silicone ou sur une base de caoutchouc.
